# EUROPEAN PATENT APPLICATION

(11) **EP 4 800 884 A1**
(43) Date of publication of application: **02.09.2026**
(21) Application number: 24882325.4
(22) Date of filing: 21.10.2024
(51) Int. Cl.: H02J 50/40, H02J 7/00, H02J 50/20, H02J 50/80

(54) **POWER RECEIVER, WIRELESS POWER SUPPLY SYSTEM, AND WIRELESS POWER SUPPLY METHOD**

(30) Priority: 26.10.2023 JP 2023184021
(71) Applicant: Toppan Holdings Inc., Tokyo 110-0016 (JP)
(72) Inventor: KITTA Ryokei, Tokyo 110-0016 (JP); NIHEI Hiroshige, Tokyo 110-0016 (JP)
(74) Representative: TBK
(86) International application number: PCT/JP2024/037308
(87) International publication number: WO 2025/089212

(57) **Abstract**

A power receiver includes: a power transfer antenna unit including a plurality of power transfer antennas configured to receive radio waves in a plurality of frequency bands allocated for power transfer; a switch unit configured to switch and output power transfer radio waves received by any of the power transfer antennas included in the power transfer antenna unit; an external interface unit configured to connect with an IoT device to be powered; and a power transfer control unit configured to transfer radio waves output from the switch unit to the IoT device via the external interface unit.

## Description

### [Technical Field]

The present invention relates to a power receiver, a wireless power transfer system, and a wireless power transfer method.

This application is based on and claims the benefit of priority from Japanese Patent Application No. 2023-184021 filed in Japan on October 26, 2023, the description of which is incorporated herein by reference.

### [Background Art]

Wireless power transfer techniques for wirelessly supplying power from a power transmitter to a power receiver are known (e.g., PTL 1). Three frequency bands are allocated for wireless power transfer: the 920 MHz band, the 2.4 GHz band, and the 5.7 GHz band.

### [Citation List]

### [Patent Literature]

PTL 1: JP 2020-18146 A

### [Summary of the Invention]

### [Technical Problem]

Although ministerial ordinances have been revised to facilitate the practical use of wireless power transfer, few power receivers are compatible with wireless power transfer. In particular, virtually no IoT (Internet of Things) devices with a sensor function and a communication function, such as monitoring cameras, are compatible with wireless power transfer. Replacing an existing IoT device with an IoT device compatible with wireless power transfer incurs switching cost. Furthermore, multiple frequency bands are allocated for wireless power transfer, and replacement with IoT devices supporting those bands involves excessive switching cost.

The present invention has been made based on the above issues, and an object of the invention is to provide a power receiver, a wireless power transfer system, and a wireless power transfer method that enable existing IoT devices to support wireless power transfer.

### [Solution to Problem]

[1] A power receiver according to an aspect of the present invention includes: a power transfer antenna unit including a plurality of power transfer antennas configured to receive radio waves in a plurality of frequency bands allocated for power transfer; a switch unit configured to switch and output power transfer radio waves received by any of the power transfer antennas included in the power transfer antenna unit; an external interface unit configured to connect with an IoT device to be powered; and a power transfer control unit configured to transfer power output from the switch unit to the IoT device via the external interface unit.
[2] The power receiver according to [1], further including a power control unit configured to convert the power output from the switch unit to power having an intended voltage.
[3] The power receiver according to [1] or [2], further including a battery unit configured to store the power output from the switch unit.
[4] The power receiver according to any one of [1] to [3], in which the plurality of frequency bands allocated for power transfer include four frequency bands: the 920 MHz band, the 2.4 GHz band, the 5.7 GHz band, and the 24 GHz band.
[5] The power receiver according to any one of [1] to [4], in which the power transfer control unit acquires battery information including the remaining battery power of the IoT device via the external interface unit, based on the acquired battery information, the power transfer control unit determines whether to transfer a radio wave in any of the plurality of frequency bands allocated for power transfer to the IoT device, and the power transfer control unit sends a power transfer start request to a power transfer control server to cause a power transmitter corresponding to the determined frequency band to transmit a power transfer radio wave.
[6] The power receiver according to [5], in which the power transfer control unit acquires the battery information during power transfer to the IoT device via the external interface unit, based on the acquired battery information, the power transfer control unit determines whether to change the frequency band of the power transfer radio wave, and when determining that the frequency band is to be changed, the power transfer control unit sends a power transfer change request to the power transfer control server to cause a power transmitter corresponding to the changed frequency to transmit the power transfer radio waves.
[7] The power receiver according to [5] or [6], in which the power transfer control unit determines whether to change the frequency band of the power transfer radio waves based on the rate of change in the remaining battery power relative to the rate of change caused by the power transfer to the IoT device via the external interface unit.
[8] The power receiver according to any one of [1] to [7], in which the power receiver communicates by transmitting radio waves in a frequency band identical to any of the bands of radio waves received by the plurality of power transfer antennas.
[9] The power receiver according to any one of [1] to [7], in which the power receiver communicates by transmitting radio waves in a frequency band different from any of the bands of radio waves received by the plurality of power transfer antennas.
[10] The power receiver according to any one of [1] to [9], in which the external interface unit includes a connector connectable with a USB cable.
[11] A wireless power transfer system according to an aspect of the present invention includes: the power receiver according to any one of [1] to [10]; and a power transfer control server configured to control a power transmitter supporting any frequency of a plurality of frequency bands allocated for power transfer to transmit power transfer radio waves in response to a request from the power receiver.
[12] A wireless power transfer method according to an aspect of the present invention is implemented by a power receiver including a power transfer antenna unit including a plurality of power transfer antennas configured to receive radio waves in a plurality of frequency bands allocated for power transfer, and an external interface unit configured to connect with an IoT device to be powered, the method including: a switch unit switching and outputting power transfer radio waves received by any of the power transfer antennas included in the power transfer antenna unit; and a power transfer control unit transferring radio waves output from the switch unit to the IoT device via the external interface unit.

### [Advantageous Effects of the Invention]

The present invention enables existing IoT devices to support wireless power transfer.

### [Brief Description of the Drawings]

Fig. 1 is a block diagram illustrating an example configuration of a wireless power transfer system 1 according to an embodiment.
Fig. 2 is a block diagram illustrating an example configuration of a power receiver 30 according to the embodiment.
Fig. 3 is a diagram showing an example of a power transfer condition storage unit 313 according to the embodiment.
Fig. 4 is a sequence diagram showing the flow of processing performed by the wireless power transfer system 1 according to the embodiment.
Fig. 5 is a sequence diagram showing the flow of processing performed by the wireless power transfer system 1 according to the embodiment.

### [Description of the Embodiments]

With reference to the drawings, a wireless power transfer system 1 and a power transfer control server 10 according to an embodiment will now be described.

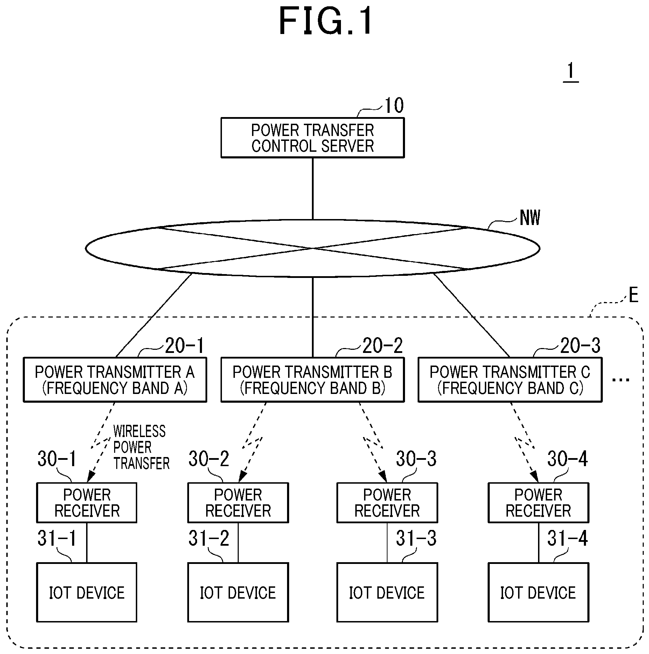

The wireless power transfer system 1 is described with reference to Fig. 1. Fig. 1 is a block diagram illustrating an example configuration of the wireless power transfer system 1 according to the embodiment. As illustrated in Fig. 1, the wireless power transfer system 1 includes, for example, the power transfer control server 10, multiple power transmitters 20 (power transmitters 20-1 to 20-3, ...), and multiple power receivers 30 (power receivers 30-1 to 30-4, ...).

The power transfer control server 10 controls the power transmitters 20, causing the power transmitters 20 to transmit power transfer radio waves for wireless power transfer to the one or more power receivers 30 present in a power transfer area E.

The power transmitters 20 transmit power transfer radio waves under the control of the power transfer control server 10. The power transmitters 20 each support one of multiple frequency bands allocated for wireless power transfer frequencies. In the illustrated example, the power transmitter 20-1 is a power transmitter A that transmits a power transfer radio wave having a frequency band A (e.g., the 920 MHz band). The power transmitter 20-2 is a power transmitter B that transmits a power transfer radio wave having a frequency band B (e.g., the 2.4 GHz band). The power transmitter 20-3 is a power transmitter C that transmits a power transfer radio wave having a frequency band C (e.g., the 5.7 GHz band). The power transmitters 20 are not limited to the above-described power transmitters 20-1 to 20-3, but may include another power transmitter (not shown) that transmits a power transfer radio wave having a frequency band D (e.g., the 24 GHz band).

For each of the multiple frequency bands allocated for wireless power transfer frequencies, the transmittable transmission power of power transfer radio wave is defined. For example, the transmission power in the 920 MHz band has an output value (e.g., 1 W) smaller than the output values for the other frequency bands. The transmission power in the 5.7 GHz band has an output value (e.g., 32 W) larger than the output values for the other frequency bands. The transmission power in the 2.4 GHz band has an output value (e.g., 15 W) between the transmission power in the 920 MHz band and the transmission power in the 5.7 GHz band. When the 24 GHz frequency band is used, the transmission power in the 24 GHz band has an output value larger than the output values for the 920 MHz, 2.4 GHz, and 5.7 GHz frequency bands. Typically, a power receiver located at the same distance from transmitting antennas can receive more power from a transmitting antenna having larger transmission power.

When different transmission powers are set for different frequency bands, a frequency band used for power transfer can be selected depending on the application of the power transfer, and wireless power transfer can be performed using the selected frequency band. For example, when a small amount of power is to be transferred, 920 MHz wireless power transfer, which is associated with low-power transmission, is available. In contrast, when a large amount of power is to be transferred, 5.7 GHz or 24 GHz wireless power transfer, which is associated with high-power transmission, is available. In other cases, when power transfer is to be completed in a short time, 5.7 GHz or 24 GHz wireless power transfer, which is associated with high-power transmission, is available. In a situation where a long time is available for power transfer, 920 MHz wireless power transfer, which is associated with low-power transmission, is available. In such a manner, the bands can be selectively used depending on the application of power transfer.

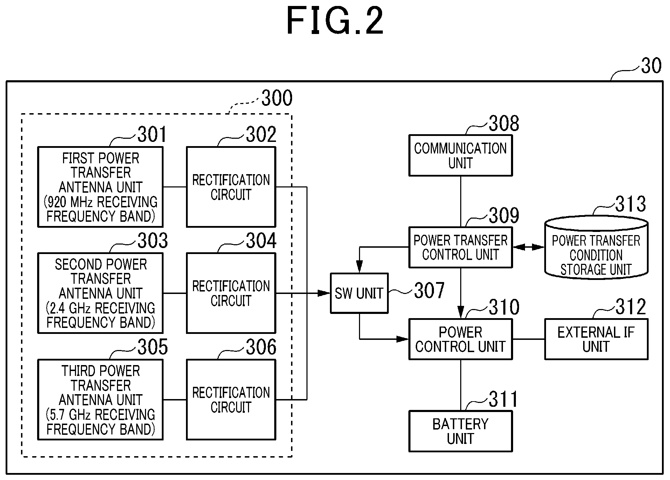

The power receiver 30 is a power receiving device that receives power for transfer transmitted from the power transmitter 20. The power receiver 30 regularly emits a radio wave containing a predetermined specific frequency or a radio wave containing a specific signal format as a beacon signal. The power receiver 30 transmits the beacon signal from a communication antenna included in a communication unit 308 described later (see Fig. 2). Alternatively, the power receiver 30 may transmit the beacon signal via short-range wireless communication, such as infrared communication.

The beacon signal contains, for example, information indicating a device ID that can identify the power receiver 30. The power receiver 30 emits a beacon signal at a radio field intensity sufficient to reach a specific area (e.g., an area with a radius of a few meters to tens of meters). When receiving a beacon signal, the power transmitter 20 identifies the power receiver 30 corresponding to the received beacon signal and determines that the power receiver 30 is present in the power transfer area E of the power transmitter 20. The power transmitter 20 notifies the power transfer control server 10 of the power receiver 30 present in the power transfer area E regularly or irregularly. In response to a power transfer start request described later, the power transfer control server 10 determines the power transmitter 20 that transfers power to the power receiver 30 based on the power transfer area E in which the power receiver 30 is present and the power transmitter 20 installed in the power transfer area E. As a result, the power transmitter 20 transmits power transfer radio waves. The power receiver 30 receives the radio waves transmitted by the power transmitter 20, receiving the power transfer radio waves.

The power receivers 30 in the present embodiment are connected with IoT devices 31. The power receivers 30 and the IoT devices 31 are connected via, for example, Universal Serial Bus (USB) cables.

Many USB cables are developed for use as power transfer cables. For example, USB 2.0 allows for the supply of a maximum voltage of 5 V and a maximum current of 500 mA and is adopted as the standard output for common USB ports and USB hubs. USB 3.0 (or USB 3.1 Gen 1, USB 3.2 Gen 1) allows for the supply of a maximum voltage of 5 V and a maximum current of 900 mA and is compliant with Battery Charging 1.2 (BC 1.2), which is known as a standard for high-power and/or high speed power transfer. USB 3.1 Gen 2 or USB 3.2 Gen 2 allows for the supply of a maximum voltage of 5 V and a maximum current of 1.5 A (1500 mA) and enables higher-output or higher-speed power transfer than USB 2.0 and USB 3.0. USB Power Delivery (USB PD) allows for the supply of a maximum voltage of 20 V and a maximum current of 5 A (5000 mA). USB PD is widely adopted for general-purpose devices such as laptops, smartphones, and tablets.

The power receivers 30 in the present embodiment are connectable with power transfer connectors provided on the IoT devices 31. The IoT devices 31 are existing general-purpose devices, and examples of the power transfer connectors on the IoT devices 31 include ports to which the above-described USB cables are connectable. The power receivers 30 supply power based on the power transfer radio waves received from the power transmitters 20 to the IoT devices 31 via the power transfer connectors such as USB cables. In the wireless power transfer system 1 in the present embodiment, this approach enables existing IoT devices that cannot support wireless power transfer on their own to become compatible with wireless power transfer.

Fig. 2 is a block diagram illustrating a configuration of the power receiver 30 according to the embodiment. The power receiver 30 includes a power transfer antenna unit 300, a switch unit (SW unit) 307, the communication unit 308, a power transfer control unit 309, a power control unit 310, a battery unit 311, an external interface unit (external IF unit) 312, and a power transfer condition storage unit 313.

The power transfer antenna unit 300 includes multiple power transfer antenna and rectification circuit pairs. For example, in the illustrated example, the power transfer antenna unit 300 includes a pair composed of a first power transfer antenna unit 301 and a rectification circuit 302, a pair composed of a second power transfer antenna unit 303 and a rectification circuit 304, and a pair composed of a third power transfer antenna unit 305 and a rectification circuit 306. These pairs receive radio waves in different frequency bands as power transfer radio waves and rectify the received radio waves (power), converting the radio waves from AC to DC power for output.

For example, the first power transfer antenna unit 301 includes an antenna that receives power transfer radio waves in the 920 MHz band. The rectification circuit 302 is a circuit that rectifies the radio waves (power) received by the first power transfer antenna unit 301, converting AC to DC power. The second power transfer antenna unit 303 includes an antenna that receives power transfer radio waves in the 2.4 GHz band. The rectification circuit 304 is a circuit that rectifies the radio waves (power) received by the second power transfer antenna unit 303, converting AC to DC power. The third power transfer antenna unit 305 includes an antenna that receives power transfer radio waves in the 5.7 GHz band. The rectification circuit 306 is a circuit that rectifies the radio waves (power) received by the third power transfer antenna unit 305, converting AC to DC power. Additionally, a power transfer antenna unit (not shown) and a rectification circuit (not shown) may be provided. The power transfer antenna unit includes an antenna that receives power transfer radio waves in the 24 GHz band, and the rectification circuit is a circuit that rectifies the radio waves (power) received by the power transfer antenna unit, converting AC to DC power.

In the example illustrated in Fig. 2, the power transfer antenna unit 300 includes the first power transfer antenna unit 301, the second power transfer antenna unit 303, and the third power transfer antenna unit 305. Hereinafter, the multiple power transfer antenna units included in the power transfer antenna unit 300 are also referred to as the multiple power transfer antennas.

The SW unit 307 switches and outputs power transfer radio waves received by any of the power transfer antennas included in the power transfer antenna unit 300. Under the control of the power transfer control unit 309, the SW unit 307 outputs power received from any of the rectification circuits 302, 304, and 306 to the power control unit 310.

The power control unit 310 controls the power supply voltage. The power control unit 310 includes, for example, a Power Management IC (PMIC). For example, the power control unit 310 has an LDO (Low Dropout) function as a linear regulator for maintaining a constant voltage and a DC-DC converter function for stepping up or stepping down input voltage. Under the control of the power transfer control unit 309, the power control unit 310 converts the DC power output from the SW unit 307 to DC power having an intended voltage and outputs the resultant DC power to the battery unit 311 and/or the external IF unit 312.

The battery unit 311 includes a power supply that supplies power to the power receiver 30. The battery unit 311 stores power output from the power control unit 310. More specifically, the battery unit 311 stores power output from the SW unit 307 and the power control unit 310. Furthermore, the battery unit 311 supplies the stored power to the power receiver 30.

The external IF unit 312 includes a connector for connecting with an IoT device 31, for example, a connector connectable with a USB cable. The external IF unit 312 supplies power output from the power control unit 310 to the IoT device 31.

The communication unit 308 communicates with the power transfer control server 10 and the power transmitter 20 through a communication network NW. For example, the communication unit 308 includes a communication antenna that allows communication. The communication unit 308 may communicate using the same frequency band as the band used by any of the power transfer antennas included in the power transfer antenna unit 300 to transmit radio waves. The power receiver 30 may also communicate with the power transfer control server 10 and/or the power transmitter 20 by transmitting radio waves in the same frequency band as any of the bands in which the multiple power transfer antennas receive radio waves.

Note that the communication may also be implemented in a frequency band different from the band used by any of the power transfer antennas to transmit radio waves. The power receiver 30 may also communicate with the power transfer control server 10 and/or the power transmitter 20 by transmitting radio waves in a frequency band different from any of the bands used by the multiple power transfer antennas to receive radio waves.

The power transfer control unit 309 controls power transfer to the IoT device 31. The power transfer control unit 309 monitors the remaining battery power of the IoT device 31 and sends requests, such as to start power transfer, to the power transfer control server 10 depending on the status of the remaining battery power.

First, a method implemented by the power transfer control unit 309 to monitor the remaining battery power is described. The power transfer control unit 309 may monitor the remaining battery power of the IoT device 31 regularly or irregularly. For example, the power transfer control unit 309 communicates with the IoT device 31 via the external IF unit 312 and requests the IoT device 31 to report battery information. The battery information includes information indicating the remaining battery power of the IoT device 31. In response to the request from the power receiver 30, the IoT device 31 outputs the battery information on the IoT device 31 to the power receiver 30 via the external IF unit 312. In this case, for example, the IoT device 31 has an application program preinstalled for wireless power transfer performed via the power receiver 30. When the application program is executed by, for example, a central processing unit (CPU) included as hardware in the IoT device 31, the IoT device 31 can implement the function of outputting the battery information in response to a request from the power transfer control unit 309 in the power receiver 30.

The power transfer control unit 309 determines whether to transfer power to the IoT device 31 based on the battery information acquired from the IoT device 31. When determining that power is to be transferred to the IoT device 31, the power transfer control unit 309 selects a power transfer mode. The power transfer mode is a way for power transfer, such as high speed power transfer or low speed power transfer. The high speed power transfer is achieved by, for example, transferring power with power transfer radio waves in the 5.7 GHz band. This is because the transmission power in the 5.7 GHz band here is set at an output value (e.g., 32 W) higher than in the other frequency bands. The low speed power transfer is achieved by, for example, transferring power with power transfer radio waves in the 920 MHz band. This is because the transmission power in the 920 MHz band is set at an output value (e.g., 1 W) lower than in the other frequency bands. Additionally, other power transfer modes may be set, of course, such as medium speed power transfer between the low speed power transfer and the high speed power transfer. The medium speed power transfer is achieved by, for example, transferring power with power transfer radio waves in the 2.4 GHz band.

When the remaining battery power of the IoT device 31 is decreasing, the power transfer control unit 309 determines that power is to be transferred. For example, when the combination of the remaining battery power of the IoT device 31 and the rate of battery power change satisfies a specific power transfer condition, the power transfer control unit 309 determines that power is to be transferred. In the present embodiment, the power transfer condition is, for example, information stored in the power transfer condition storage unit 313 beforehand.

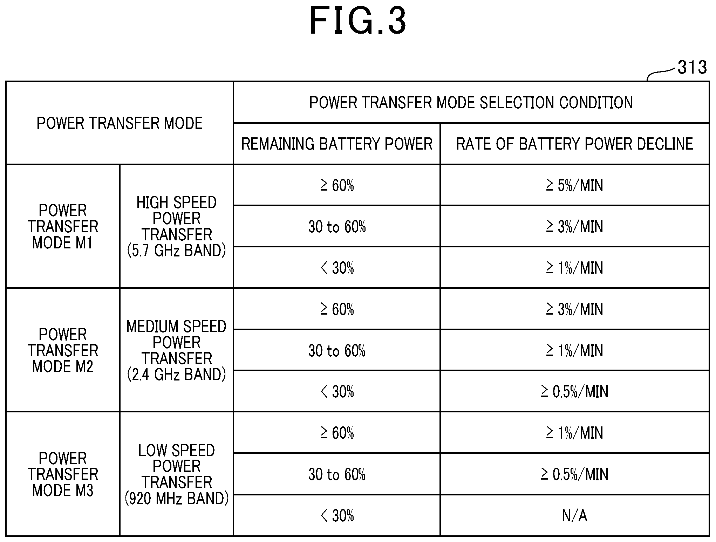

Fig. 3 describes example information stored in the power transfer condition storage unit 313 according to the embodiment. For example, power transfer conditions include information corresponding to each item in the power transfer modes and power transfer mode selection conditions. The power transfer modes are, for example, power transfer modes M1 to M3, which correspond to the high speed power transfer, the medium speed power transfer, and the low speed power transfer, respectively. The high speed power transfer is power transfer using power transfer radio waves in the 5.7 GHz band. The medium speed power transfer is power transfer using power transfer radio waves in the 2.4 GHz band. The low speed power transfer is power transfer using power transfer radio waves in the 920 MHz band.

The power transfer mode selection conditions represent conditions for selecting the power transfer modes. The power transfer mode selection conditions include the remaining battery power and the rate of battery power decline. The remaining battery power is the battery level of the IoT device 31. The rate of battery power decline is the rate of decrease when the remaining battery power is decreasing. For example, when the rate of battery power decline is 5% per minute, the remaining battery power is decreasing at a rate of 5% per minute.

For example, in this illustrated example, the following three patterns are determined as conditions under which the power transfer mode M1 (high speed power transfer) is selected. The first pattern is a condition met when the remaining battery power is 60% or more and the rate of battery power decline is 5% or more per minute. The second pattern is a condition met when the remaining battery power is within the range of 30 to 60% (30% or more and less than 60%) and the rate of battery power decline is 3% or more per minute. The third pattern is a condition met when the remaining battery power is less than 30% and the rate of battery power decline is 1% or more per minute.

In this illustrated example, the following three patterns are determined as conditions under which the power transfer mode M2 (medium speed power transfer) is selected. The first pattern is a condition met when the remaining battery power is 60% or more and the rate of battery power decline is 3% or more per minute. The second pattern is a condition met when the remaining battery power is within the range of 30 to 60% (30% or more and less than 60%) and the rate of battery power decline is 1% or more per minute. The third pattern is a condition met when the remaining battery power is less than 30% and the rate of battery power decline is 0.5% or more per minute.

In this illustrated example, the following two patterns are determined as conditions under which the power transfer mode M3 (low speed power transfer) is selected. The first pattern is a condition met when the remaining battery power is 60% or more and the rate of battery power decline is 1% or more per minute. The second pattern is a condition met when the remaining battery power is within the range of 30 to 60% (30% or more and less than 60%) and the rate of battery power decline is 0.5% or more per minute. The illustrated example indicates that the power transfer mode M3 (low speed power transfer) is not applied when the remaining battery power of the IoT device 31 is less than 30%.

The example in Fig. 3 has been described as an example with the power transfer modes M1 to M3 corresponding to the high speed power transfer, the medium speed power transfer, and the low speed power transfer. However, in addition to the power transfer modes M1 to M3, a power transfer mode M0 may be included to support ultrahigh speed power transfer, which is power transfer with power transfer radio waves in the 24 GHz band. Conditions under which the power transfer mode M0 (ultrahigh speed power transfer) is selected may be met when the rate of battery power decline is higher than in the conditions under which the power transfer mode M1 is selected.

Next, a method implemented by the power transfer control unit 309 to send requests, such as to start power transfer, to the power transfer control server 10 depending on the status of the remaining battery power of the IoT device 31 is described.

As described above, when determining that power is to be transferred to the IoT device 31 depending on the status of the remaining battery power of the IoT device 31, the power transfer control unit 309 determines the power transfer mode for the power transfer based on the power transfer conditions stored in the power transfer condition storage unit 313. In this case, the power transfer control unit 309 transmits a notification requesting the power transfer control server 10 to start power transfer (power transfer start request) to the power transfer control server 10 via the communication unit 308. The power transfer start request contains, for example, information indicating the power transfer mode, a device ID that can identify the power receiver 30, and battery information on the power receiver 30.

In a state in which wireless power transfer is being performed, when the remaining battery power of the IoT device 31 exceeds a threshold value (e.g., 90%), the power transfer control unit 309 determines that the power transfer is to be ended. In this case, the power transfer control unit 309 transmits a notification requesting the power transfer control server 10 to end the power transfer (power transfer termination request) to the power transfer control server 10 via the communication unit 308. The power transfer termination request contains, for example, a device ID that can identify the power receiver 30 and battery information on the power receiver 30.

During wireless power transfer in the power transfer mode corresponding to the low speed power transfer, when the IoT device 31 starts high-load signal processing, such as video downloading, the power consumption associated with the signal processing may be larger than the amount of power supplied via the wireless power transfer. In such a case, it is desirable to increase the amount of power supplied via the wireless power transfer by switching to the power transfer mode corresponding to the high speed power transfer, reducing the rate of decrease in the remaining battery power of the IoT device 31.

Alternatively, during wireless power transfer in the power transfer mode corresponding to the high speed power transfer, the power consumption associated with signal processing may become smaller due to, for example, the end of the current high-load signal processing. In such a case, it is desirable to reduce the amount of power supplied via the wireless power transfer by switching to the power transfer mode corresponding to the low speed power transfer.

To take these measures, in the present embodiment, the power transfer mode in which wireless power transfer is being performed can be changed. Specifically, in a state in which wireless power transfer is being performed, when the remaining battery power of the IoT device 31 changes differently from the remaining battery power change expected to result from the wireless power transfer, the power transfer control unit 309 determines that the power transfer mode is to be changed. In this case, the power transfer control unit 309 transmits a notification requesting the power transfer control server 10 to change the power transfer mode (a power transfer change request) to the power transfer control server 10 via the communication unit 308. The power transfer change request contains, for example, information indicating the power transfer mode after the change, a device ID that can identify the power receiver 30, and battery information on the power receiver 30.

When the power transfer mode can be changed, it is desirable that the power transfer control server 10 can be notified of not only changing the power transfer mode but also not changing the power transfer mode, or maintaining the power transfer mode. For example, in a state in which wireless power transfer is being performed, when the remaining battery power of the IoT device 31 changes in a way consistent with the remaining battery power change expected to result from the wireless power transfer, the power transfer mode is determined to be maintained. In this case, the power transfer control unit 309 transmits a notification requesting the power transfer control server 10 to maintain the power transfer mode (a power transfer maintenance request) to the power transfer control server 10 via the communication unit 308. The power transfer maintenance request contains, for example, information indicating the power transfer mode to be maintained, a device ID that can identify the power receiver 30, and battery information on the power receiver 30.

The power transfer control unit 309 may also control power transfer to the battery unit 311. For example, the power transfer control unit 309 controls power transfer to the battery unit 311 by a method similar to the method for controlling power transfer to the IoT device 31.

Specifically, the power transfer control unit 309 monitors the remaining battery power of the battery unit 311. When a predetermined power transfer start condition for the battery unit 311 is satisfied, the power transfer control unit 309 controls the power control unit 310 to apply all or part of the radio waves (power) received from the power transmitter 20 to the battery unit 311. The power transfer start condition here for the battery unit 311 is met when, for example, the remaining battery power of the battery unit 311 is smaller than a threshold value (e.g., 60%). Further, when the remaining battery power of the battery unit 311 satisfies a predetermined power transfer termination condition for the battery unit 311, for example, when the remaining battery power of the battery unit 311 is higher than or equal to a threshold value (e.g., 90%), the power transfer control unit 309 controls the power control unit 310 not to apply the radio waves received from the power transmitter 20 to the battery unit 311.

When determining that power transfer to the IoT device 31 is to be started, the power transfer control unit 309 may, for example, retrieve the remaining battery power of the battery unit 311 and determine whether to transfer power to the battery unit 311 based on the retrieved remaining battery power.

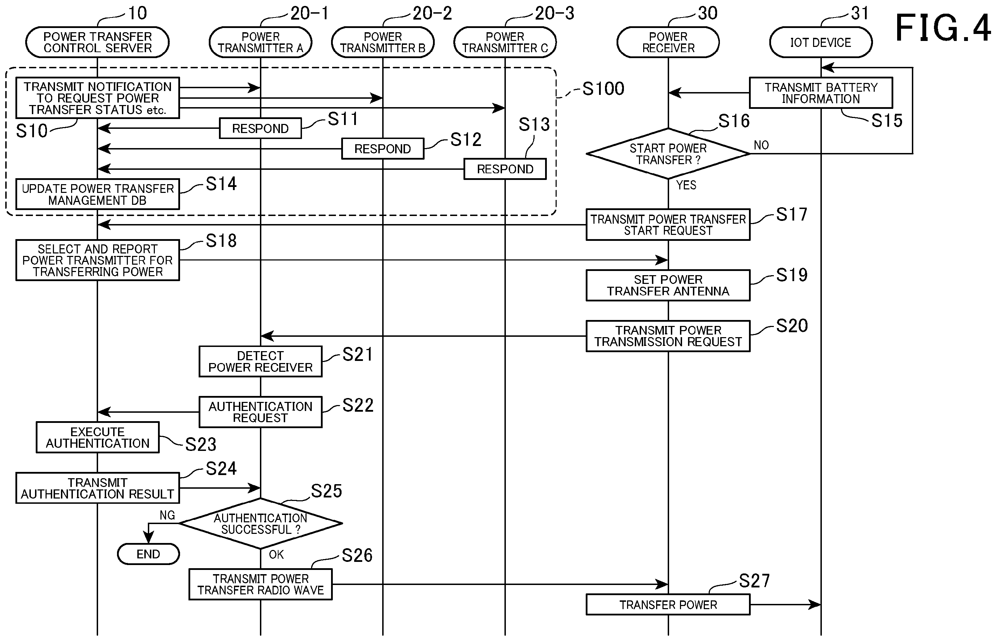

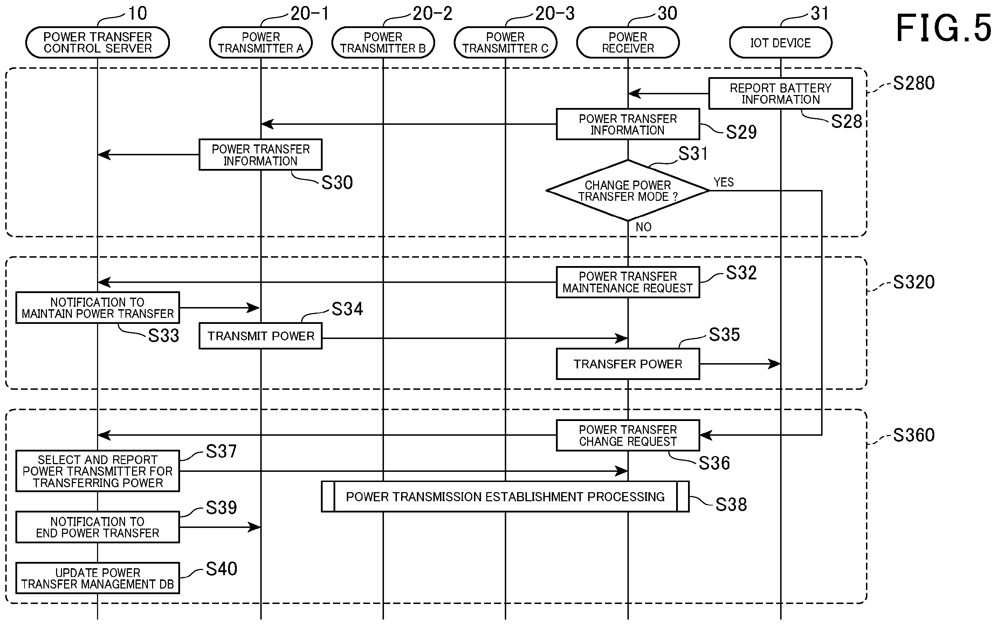

Figs. 4 and 5 are sequence diagrams showing the flows of processing performed by the wireless power transfer system 1 according to the embodiment. Fig. 4 shows the flow of processing performed until the start of wireless power transfer to the IoT devices 31. Fig. 5 shows the flow of processing for changing or maintaining the power transfer mode during the wireless power transfer.

As shown in Fig. 4, the power transfer control server 10 monitors the power transfer status (step S100). Step S100 includes the processing indicated in steps S10 to S14. Specifically, the power transfer control server 10 regularly or irregularly transmits a notification to each of the power transmitters 20 to request the power transfer status and other information (step S10).

Examples of the notification to request the power transfer status and other information include notifications to request the number of power receivers 30 currently being powered by the power transmitter 20, the number of power receivers 30 present in the power transfer area E of the power transmitter 20, and the maximum number of power receivers 30 that can be powered by the power transmitter 20. For example, in order that a single power transmitter 20 can wirelessly transfer power to multiple power receivers 30, the wireless power transfer system 1 may use a system in which the power transmitter 20 transmits power transfer radio waves to a different power receiver 30 in each time slot based on time division multiple access (TDMA). In this case, the maximum number of power receivers 30 that can be powered by the power transmitter 20 is determined depending on the number of time slots. When the wireless power transfer system 1 uses such a system that allows power transfer based on TDMA, a single power transmitter 20 can wirelessly transfer power to multiple power receivers 30. Accordingly, the number of power receivers 30 currently being powered by the power transmitter 20 and the maximum number of power receivers 30 that can be powered by the power transmitter 20 are examples of the power transfer status.

Each of the power transmitters 20 receives the notification to request the power transfer status and other information from the power transfer control server 10 and responds to the received notification to request the power transfer status and other information (steps S11 to S13). The power transfer control server 10 receives the response transmitted from each of the power transmitters 20 and updates a power transfer management database (DB) based on the received response (step S14). The power transfer management DB is a database for managing power transfer performed by the power transmitter 20. The power transfer management DB stores the power transfer status, for example, the number of power receivers 30 currently being powered by the power transmitter 20, the number of power receivers 30 present in the power transfer area E of the power transmitter 20, and the maximum number of power receivers 30 that can be powered by the power transmitter 20. The information stored in the power transfer management DB is updated when the power transfer status changes. The power transfer control server 10 may incorporate the power transfer management DB, or the power transfer management DB may be incorporated in a database server located outside the power transfer control server 10 and connected to the power transfer control server 10 in a communicable manner.

Meanwhile, the IoT device 31 transmits the battery information on the IoT device 31 to the power receiver 30 (step S15). The IoT device 31 may output the battery information in response to a request from the power receiver 30 or regularly or irregularly output the battery information on the IoT device 31 to the power receiver 30. The power receiver 30 and the IoT device 31 communicate, for example, via the external IF unit 312 and more specifically, using a communication terminal provided on a USB connector.

The power receiver 30 receives the battery information on the IoT device 31 and determines whether to start power transfer to the IoT device 31 based on the received battery information (step S16). When the remaining battery power of the IoT device 31 and the rate of battery power decline satisfy the power transfer condition stored in the power transfer condition storage unit 313, the power receiver 30 determines that the power transfer is to be started.

When determining that the power transfer to the IoT device 31 is to be started, the power receiver 30 sends a power transfer start request (step S17). When determining that the power transfer is to be started in step S16, the power receiver 30 first determines which of the multiple power transfer modes is used to start the power transfer, on the basis of the power transfer condition. The power receiver 30 transmits a power transfer start request containing, for example, information indicating the power transfer mode, a device ID that can identify the power receiver 30, and battery information on the power receiver 30 to the power transfer control server 10. In this manner, the power receiver 30 sends a power transfer start request.

In response to the power transfer start request, the power transfer control server 10 selects the power transmitter 20 that transfers power to the power receiver 30 and notifies the power receiver 30 of the selected power transmitter 20 (step S18). The power transfer control server 10 receives a power transfer start request and acquires the power transfer mode indicated in the received power transfer start request. The power transfer control server 10 selects the power transmitter 20 that transfers power to the power receiver 30 based on the acquired power transfer mode and the power transfer status of the power transmitter 20.

For example, the power transfer control server 10 selects one of the power transmitters 20 that satisfies all three conditions as the power transmitter 20 that transfers power to the power receiver 30 that has sent the power transfer start request. The first condition of the three conditions is met when presence is detected in the power transfer area E in which the power receiver 30 is present. The second condition is met when radio waves are transmittable in the frequency band corresponding to the power transfer mode indicated in the power transfer start request. The third condition is met when there is a time slot in which no power transfer radio waves are transmitted.

The power transfer control server 10 transmits identification information about the selected power transmitter 20 to the power receiver 30 as a response to the power transfer start request.

The power receiver 30 receives the response to the power transfer start request and sets a power transfer antenna based on the received response (step S19). The power transfer control unit 309 in the power receiver 30 controls the SW unit 307 so that radio waves received by one of the multiple power transfer antennas that corresponds to the intended frequency band are output to the power control unit 310.

The power receiver 30 sends a power transmission request to the power transmitter 20 (step S20). The power transmission request is a notification requesting the power transmitter 20 to transmit power to the power receiver 30. The power receiver 30 transmits the power transmission request, as a response to the power transfer start request, to the power transmitter 20 indicated as the power transmitter 20 that transmits power to the power receiver 30. For example, the frequency of regularly transmitted beacon signals or the signal content contained in a specific signal format are adapted to the power transmission request, and the power transmission request is transmitted to the power transmitter 20.

When receiving a transmission request from the power receiver 30, the power transmitter 20 detects the power receiver 30 to which a power transfer radio wave is transmitted, based on the received transmission request (step S21).

The power transmitter 20 transmits an authentication request for the power receiver 30 to the power transfer control server 10 (step S22). The authentication request is a notification requesting determination of whether the power receiver 30 is a power receiver recorded in advance as a target for wireless power transfer in the wireless power transfer system 1.

For example, to receive a wireless power transfer service provided by using the wireless power transfer system 1, the power receiver 30 registers as a user in advance. For example, the power receiver 30 registers as a user by notifying the power transfer control server 10 of registration information, such as identification information about the power receiver 30, power transfer specifications (e.g., the maximum power and maximum voltage that can be received by the power receiver 30), and an authentication number (password) used for authentication. During the user registration, the power transfer control server 10 records the registration information obtained from the power receiver 30 in, for example, the power transfer management DB.

For example, the power transmitter 20 requests the authentication number (password) from the power receiver 30 that has sent the power transmission request, and transmits the authentication number (password) received from the power receiver 30 in response to this request and the identification information about the power receiver 30 to the power transfer control server 10, making an authentication request.

The power transfer control server 10 executes authentication on the power receiver 30 in response to the authentication request from the power transmitter 20 (step S23). The power transfer control server 10 determines whether the combination of the authentication number (password) and the identification information indicated in the authentication request is stored in the power transfer management DB. If the combination of the authentication number (password) and the identification information indicated in the authentication request is stored in the power transfer management DB, the power transfer control server 10 determines that the authentication is successful, that is, the power receiver 30 is a power receiver recorded in advance as a target for wireless power transfer in the wireless power transfer system 1. In contrast, if the combination of the authentication number (password) and the identification information indicated in the authentication request is not stored in the power transfer management DB, the power transfer control server 10 determines that the authentication is unsuccessful, that is, the power receiver 30 is not a power receiver recorded in advance as a target for wireless power transfer in the wireless power transfer system 1. The power transfer control server 10 transmits the authentication result to the power transmitter 20 (step S24).

The power transmitter 20 determines whether the authentication result transmitted from the power transfer control server 10 indicates that the authentication is successful, that is, the power receiver 30 is a power receiver recorded in advance as a target for wireless power transfer in the wireless power transfer system 1 (step S25). When the authentication is not successful, that is, the authentication is unsuccessful, the power transmitter 20 ends the processing without transferring power.

When the authentication result indicates that the authentication is successful in step S25, the power transmitter 20 transmits power transfer radio waves to the power receiver 30 (step S26). The power receiver 30 receives the power transfer radio waves transmitted from the power transmitter 20 and applies the received radio waves (power) to the IoT device 31 via the external IF unit 312 (step S27). In this manner, the IoT device 31 is supplied with power.

As shown in Fig. 5, the battery status of the IoT device 31 is monitored regularly or irregularly during wireless power transfer (step S280). The processing indicated in step S28 is the same as the processing indicated in step S15. The power receiver 30 transmits power transfer information to the power transmitter 20 (step S29). The power transfer information indicates the battery status of the IoT device 31 during power transfer. The power transfer information includes battery information transmitted from the IoT device 31 and identification information about the power receiver 30 during charging. The power transmitter 20 transmits the power transfer information received from the power receiver 30 to the power transfer control server 10 (step S30).

The power receiver 30 receives battery information about the IoT device 31 and determines whether to change the power transfer mode, based on the received battery information (step S31). When the remaining battery power of the IoT device 31 changes over time differently from the time-series remaining battery power change expected to result from the wireless power transfer, the power receiver 30 determines that the power transfer mode is to be changed. In contrast, when the remaining battery power of the IoT device 31 changes over time in a way consistent with the time-series remaining battery power change expected to result from the wireless power transfer, the power receiver 30 determines that the power transfer mode is not to be changed, that is, the current power transfer mode is to be maintained.

To maintain the power transfer mode, the power receiver 30 executes a series of processing indicated in step S320. To change the power transfer mode, the power receiver 30 executes a series of processing indicated in step S360.

Step S320 includes the processing indicated in steps S32 to S35. To maintain the power transfer mode, the power receiver 30 transmits a power transfer maintenance request to the power transfer control server 10 (step S32). In response to the power transfer maintenance request, the power transfer control server 10 transmits a notification to maintain the power transfer (an instruction to maintain the power transfer) to the power transmitter 20 that is transferring power to the power receiver 30 (step S33). In response to the instruction from the power transfer control server 10 to maintain the power transfer, the power transmitter 20 transmits power transfer radio waves to the power receiver 30 (step S34). The processing indicated in step S35 is the same as the processing indicated in step S27.

Step S360 includes the processing indicated in steps S36 to S40. To change the power transfer mode, the power receiver 30 transmits a power transfer change request to the power transfer control server 10 (step S36). In response to the power transfer change request, the power transfer control server 10 selects a power transmitter 20 that transfers power to the power receiver 30 and notifies the power receiver 30 of the selected power transmitter 20 (step S37). The processing indicated in step S37 is the same as the processing indicated in step S18, and thus detailed description of the processing will be omitted.

The power receiver 30 receives the response to the power transfer change request and executes power transmission establishment processing based on the received response (step S38). The power transmission establishment processing is the same as the series of processing indicated in steps S19 to S27.

The power transfer control server 10 transmits a notification to end the power transfer (a request to end the power transfer) to the power transmitter 20 that has transferred power to the power receiver 30 until the change of the power transfer mode (referred to as the previous power transmitter) (step S39). In response to the request to end the power transfer from the power transfer control server 10, the power transmitter 20 ends the power transfer to the power receiver 30. The power transfer control server 10 updates the power transfer management DB (step S40).

For example, the power transfer control server 10 determines whether power transmission establishment processing is executed and power transfer is started by the power transmitter 20 used after the change of the power transfer mode (referred to as the new power transmitter). For example, when receiving power transfer information corresponding to step S30 from the new power transmitter, the power transfer control server 10 determines that the power transfer from the new power transmitter is started. When the power transfer from the new power transmitter is started, the power transfer control server 10 ends the power transfer from the previous power transmitter to the power receiver 30.

As described above, the power receiver 30 in the embodiment includes the power transfer antenna unit 300, the SW unit 307, the external IF unit 312 (an example of an external interface unit), and the power transfer control unit 309. The power transfer antenna unit 300 includes the multiple power transfer antennas that receive radio waves in the multiple frequency bands allocated for power transfer. The SW unit 307 switches and outputs power transfer radio waves received by any of the power transfer antennas included in the power transfer antenna unit 300. The external IF unit 312 connects with the IoT device 31 to be powered. The power transfer control unit 309 transfers the power output from the SW unit 307 to the IoT device 31 via the external IF unit 312. In this manner, the power receiver 30 in the embodiment can supply the power received by the power receiver 30 through wireless power transfer to the IoT device 31 connected via the external IF unit 312. This enables existing IoT devices to support wireless power transfer.

For the power receiver 30 in the embodiment, the multiple frequency bands allocated for power transfer include three frequency bands: the 920 MHz band, the 2.4 GHz band, and the 5.7 GHz band. This allows the power receiver 30 in the embodiment to support power transfer using power corresponding to each of the three frequency bands allocated for wireless power transfer frequencies: the 920 MHz band, the 2.4 GHz band, and the 5.7 GHz band.

Note that the multiple frequency bands allocated for power transfer may include four frequency bands: the 920 MHz band, the 2.4 GHz band, the 5.7 GHz band, and the 24 GHz band. This allows the power receiver 30 in the embodiment to support power transfer using power corresponding to each of the four frequency bands allocated for wireless power transfer frequencies: the 920 MHz band, the 2.4 GHz band, the 5.7 GHz band, and the 24 GHz band.

In the power receiver 30 according to the embodiment, the power transfer control unit 309 acquires battery information including the remaining battery power of the IoT device via the external IF unit 312. Based on the acquired battery information, the power transfer control unit 309 determines whether to transfer a radio wave in any of the multiple frequency bands allocated for power transfer to the IoT device 31. The power transfer control unit 309 sends a power transfer start request to the power transfer control server 10 to cause the power transmitter 20 corresponding to the determined frequency band to transmit power transfer radio waves. This allows the power receiver 30 in the embodiment to determine whether to use high speed power transfer or low speed power transfer, depending on the remaining battery power status of the IoT device 31, thus achieving more suitable wireless power transfer.

In the power receiver 30 according to the embodiment, the power transfer control unit 309 acquires the battery information during power transfer to the IoT device 31 via the external IF unit 312. Based on the acquired remaining battery power, the power transfer control unit 309 determines whether to change the power transfer mode (the frequency band of the power transfer radio wave). When determining that the frequency band is to be changed, the power transfer control unit 309 sends a power transfer change request to the power transfer control server 10 to allow the power transmitter 20 corresponding to the changed frequency to transmit power transfer radio waves. This allows the power receiver 30 in the embodiment to change the power transfer mode during wireless power transfer to the IoT device 31. Accordingly, in a state in which wireless power transfer is being performed, the power transfer mode can be changed to a more suitable one depending on the battery status variation caused when, for example, the load of signal processing executed by the IoT device 31 changes.

In the power receiver 30 according to the embodiment, the power transfer control unit 309 determines whether to change the power transfer mode (the frequency band of the power transfer radio wave) based on the rate of change in the remaining battery power of the IoT device 31 relative to the rate of change caused by the power transfer to the IoT device 31 via the external IF unit 312. Accordingly, in the power receiver 30 according to the embodiment, when the IoT device 31 during power transfer has a different battery status from an expected status, for example, when the battery power recovery is delayed beyond expectations, the power transfer mode can be switched to a mode capable of supplying power at a higher rate.

The wireless power transfer system 1 in the embodiment includes the power receiver 30 and the power transfer control server 10. The power transfer control server 10 controls the power transmitter 20 supporting any frequency of the multiple frequency bands allocated for power transfer to transmit power transfer radio waves in response to a request (a power transfer start request or a power transfer change request) from the power receiver 30. This enables existing IoT devices to support wireless power transfer in the wireless power transfer system 1 according to the embodiment.

Although the three frequency bands, or the 920 MHz band, the 2.4 GHz band, and the 5.7 GHz band, are allocated for power transfer frequency bands in the above-described embodiment, the power transfer frequency bands are not limited to those bands. In the future, more frequency bands may become available for wireless power transfer. For example, as described above, the 24 GHz band may be newly allocated for a power transfer frequency band.

When a frequency band different from the three frequency bands, or the 920 MHz band, the 2.4 GHz band, and the 5.7 GHz band is allocated for a power transfer frequency band (hereinafter, referred to as a newly allocated band), the power receiver 30 may be configured, of course, to receive power wirelessly transferred in this newly allocated band. Specifically, the power transfer antenna unit 300 includes a fourth power transfer antenna unit including a power transfer antenna that receives radio waves in a newly allocated band and a rectification circuit for the newly allocated band. The fourth power transfer antenna unit receives power wirelessly transferred in the newly allocated band. The rectification circuit for the newly allocated band is installed downstream of the fourth power transfer antenna unit, and converts radio waves received by the fourth power transfer antenna unit to DC power and outputs the resultant power to the SW unit 307. Under the control of the power transfer control unit 309, the SW unit 307 outputs power received from any of the rectification circuits 302, 304, and 306 and the rectification circuit for the newly allocated band to the power control unit 310.

The power receiver 30 may be configured to support all four frequency bands (the 920 MHz band, the 2.4 GHz band, the 5.7 GHz band, and the newly allocated band) allocated for power transfer or may be configured to support wireless power transfer in any two or three of the four frequency bands.

Similarly, when the three frequency bands (the 920 MHz band, the 2.4 GHz band, and the 5.7 GHz band) are allocated for power transfer, the power receiver 30 may be configured to support all the three frequency bands allocated for power transfer or may be configured to support wireless power transfer in any two of the three frequency bands.

All or some of the wireless power transfer system 1, the power receiver 30, and the power transfer control server 10 according to the above-described embodiment may be achieved by a computer. In this case, programs that achieve the functions may be recorded on a computer-readable recording medium so that the computer system can read and run the programs recorded on the recording medium. The computer system herein refers to one that includes an operating system (OS) and hardware such as peripheral devices. The computer-readable recording medium refers to a storage device, including a portable medium such as a flexible disk, magnetooptical disk, ROM or CD-ROM, or a hard disk incorporated in a computer system. The computer-readable recording medium may include a medium that dynamically retains a program in a short period of time, such as a communication line that transmits a program through a network such as the internet or a telecommunication line such as a telephone line, or a medium that retains the program for a given period of time in that case, such as a volatile memory of a computer system that serves as a server or a client. The above programs may achieve part of the functions described above, or may achieve the functions in combination with programs already recorded in a computer system, or may achieve the functions by using a programmable logic device, such as an FPGA.

### [Reference Signs List]

- 1: Wireless power transfer system
- 10: Power transfer control server
- 20: Power transmitter
- 30: Power receiver
- 31: IoT device
- 300: Power transfer antenna unit
- 301: First power transfer antenna unit
- 302, 304, 306: Rectification circuit
- 303: Second power transfer antenna unit
- 305: Third power transfer antenna unit
- 306: Rectification circuit
- 307: SW unit (switch unit)
- 308: Communication unit
- 309: Power transfer control unit
- 310: Power control unit
- 311: Battery unit
- 312: External IF unit (external interface unit)

## Claims

1. A power receiver comprising:
a power transfer antenna unit including a plurality of power transfer antennas configured to receive radio waves in a plurality of frequency bands allocated for power transfer;
a switch unit configured to switch and output power for transfer received by any of the power transfer antennas included in the power transfer antenna unit;
an external interface unit configured to connect with an IoT device to be powered; and
a power transfer control unit configured to transfer radio waves output from the switch unit to the IoT device via the external interface unit.

2. The power receiver according to claim 1, further comprising:
a power control unit configured to convert the power output from the switch unit to power having an intended voltage.

3. The power receiver according to claim 1, further comprising:
a battery unit configured to store the power output from the switch unit.

4. The power receiver according to claim 1, wherein
the plurality of frequency bands allocated for power transfer include four frequency bands: a 920 MHz band, a 2.4 GHz band, a 5.7 GHz band, and a 24 GHz band.

5. The power receiver according to claim 1, wherein
the power transfer control unit acquires battery information including remaining battery power of the IoT device via the external interface unit,
based on the acquired battery information, the power transfer control unit determines whether to transfer a radio wave in any of the plurality of frequency bands allocated for power transfer to the IoT device, and
the power transfer control unit sends a power transfer start request to a power transfer control server to cause a power transmitter corresponding to the determined frequency band to transmit power transfer radio waves.

6. The power receiver according to claim 5, wherein
the power transfer control unit acquires the battery information during power transfer to the IoT device via the external interface unit,
based on the acquired battery information, the power transfer control unit determines whether to change the frequency band of the power transfer radio waves, and
when determining that the frequency band is to be changed, the power transfer control unit sends a power transfer change request to the power transfer control server to cause a power transmitter corresponding to the changed frequency to transmit the power transfer radio waves.

7. The power receiver according to claim 5, wherein
the power transfer control unit determines whether to change the frequency band of the power transfer radio waves based on a rate of change in the remaining battery power relative to a rate of change caused by the power transfer to the IoT device via the external interface unit.

8. The power receiver according to claim 1, wherein
the power receiver communicates by transmitting radio waves in a frequency band identical to any of the bands of radio waves received by the plurality of power transfer antennas.

9. The power receiver according to claim 1, wherein
the power receiver communicates by transmitting radio waves in a frequency band different from any of the bands of radio waves received by the plurality of power transfer antennas.

10. The power receiver according to claim 1, wherein
the external interface unit includes a connector connectable with a USB cable.

11. A wireless power transfer system comprising:
the power receiver according to claim 1; and
a power transfer control server configured to control a power transmitter supporting any frequency of a plurality of frequency bands allocated for power transfer to transmit power transfer radio waves in response to a request from the power receiver.

12. A wireless power transfer method implemented by a power receiver including a power transfer antenna unit including a plurality of power transfer antennas configured to receive radio waves in a plurality of frequency bands allocated for power transfer, and an external interface unit configured to connect with an IoT device to be powered, the method comprising:
a switch unit switching and outputting power transfer radio waves received by any of the power transfer antennas included in the power transfer antenna unit; and
a power transfer control unit transferring radio waves output from the switch unit to the IoT device via the external interface unit.
